# EUROPEAN PATENT APPLICATION

(11) **EP 1 167 834 A1**
(43) Date of publication of application: **02.01.2002**
(21) Application number: 01304390.6
(22) Date of filing: 17.05.2001
(51) Int. Cl.: F16H 61/04, B60K 6/04

(54) **Power transmission system having an electromagnetic device for improved ratio changing events**

(30) Priority: 29.06.2000 US 606580
(71) Applicant: BorgWarner Inc., Troy, Michigan 48084 (US)
(72) Inventor: Kirkwood, Malcolm E., Livonia, MI 48152 (US)
(74) Representative: Hedges, Martin Nicholas

(57) **Abstract**

A power transmission system (10) has an input power source (12) such as an internal combustion engine with a crankshaft, in communication with one portion of a shift clutch (16). The other portion of the shift clutch is in communication with an output mechanical system, such as a transmission (18), to drive an output shaft. The power source (14) is also in communication with an electromagnetic device (14), which is controlled by an electrical system (22) to absorb power that would otherwise be transmitted to the clutch (16), the electromagnetic device operates as a generator to reduce the engine (12) speed, or as a motor to accelerate the engine (12).

## Description

The present invention relates generally to power transmissions. More particularly, the present invention relates to a method and apparatus for augmenting ratio changing events in a power transmission system by controlling the rotational kinetic energy of an input power source.

### Background Art

All power transmission systems generate rotational kinetic energy or inertia between an input power source, such as an internal combustion engine, and an output mechanical system, such as drive gears, during ratio changing events. In order for these power transmissions to operate, the amount and effect of any rotational kinetic energy (inertia) must be controlled during the ratio changing event. The better the rotational kinetic energy is controlled, the more efficient the power transfer will occur during the ratio changing event.

Numerous methods and devices have been utilized in an effort to control the inertia generated during ratio changing events of these power transmissions. These methods and devices that have been utilized include friction clutches and precision power source energy controls. The function of these components is to transmit engine output torque plus the input system rotational kinetic energy resultant of speed pull down during an upshift. In so doing, these friction elements absorb, during the inertial phase of an upshift, a significant amount of the resultant thermal load experienced during a friction element's expected life cycle.

These various methods and devices all require precise dynamic control between the input power source and the output mechanical system in order to handle the rotational kinetic energy that is generated. In an effort to reduce the rotational kinetic energy and improve the performance of these methods and devices, synchronizers and/or blocker rings have also been utilized. Nevertheless, these methods and devices all typically suffer from a variety of other disadvantages, including breakdown due to mechanical and thermal stress. They also suffer from durability problems due to their inability to consistency provide the required precise control. Further, many of the proposed methods and devices for controlling the rotational kinetic energy require a relatively large amount of space or envelope.

The problems discussed above exist in both automatic transmissions and automated manual transmissions. However, because of the different configurations of automated manual transmissions, alternative attempts have been made to alleviate the disadvantages described above. For example, current automated manual transmissions have attempted to provide reliable internal element synchronous speed during an up shift event. However, this has been found to place a tremendous burden on, among other components, the synchronizer rings which creates many constraints and/or functional compromises.

The problems discussed above, including breakdowns due to mechanical and thermal stress and decreased durability can significantly increase the cost to manufacture and operate current power transmission systems. These breakdowns can further decrease the useful life of current power transmissions. Moreover, such limitations in these prior methods and devices can cause damage to other portions of the power transmission if they should fail for any reason.

While some of these prior energy dissipation methods and devices work better than others, they each suffer from one or more of the above problems or have other disadvantages. It would therefore be advantageous to provide a power transmission system that eliminates or minimizes the above problems in order to provide an improved, less costly power transmission system with a significantly longer useful life.

### Summary Of The Invention

It is therefore an object of the present invention to provide a power transmission system that mitigates the thermal energy input to an output mechanical system during the initial kinetic energy phase of ratio changing events.

It is another object of the present invention to provide a power transmission system with significantly increased life expectancy.

It is a further object of the present invention to provide a power transmission system that provides consistent performance characteristics throughout its useful life.

It is still another object of the present invention to provide a power transmission system that reduces the space envelope required for any friction elements.

It is yet a further object of the present invention to provide a power transmission system that is less costly than prior power transmissions.

It is yet another object of the present invention to provide a power transmission system that provides improved output torque disturbance characteristics over prior power transmissions.

In accordance with the above and other objects of the present invention, a power transmission system is provided. The power transmission system has an input power source in communication with one portion of a clutch. The transmission system has an output mechanical system in communication with the other portion of the clutch. The input power source is also in communication with an electromagnetic device. The electromagnetic device is controlled by an electrical system capable of absorbing power that would otherwise be transmitted to the friction element. The electrical system provides precise control of electrical energy to the electromagnetic device to allow it to function as a motor to create a positive torque pulse augmenting the engine during crankshaft deceleration. Additionally, the electromagnetic device is capable of functioning as a generator to truncate a positive torque pulse during crankshaft acceleration. By operating the electromagnetic device in this manner, the resultant engine output torque provides a smooth torque ripple.

These and other features and advantages of the present invention will become apparent from the following descriptions of the invention, when viewed in accordance with the accompanying drawings and appended claims.

### Brief Description Of The Drawings

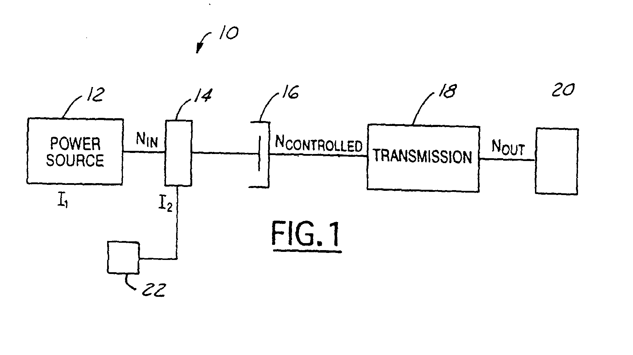

FIGURE 1 is a schematic illustration of a power transmission system utilizing an electromagnetic device attached to an input power source in accordance with a preferred embodiment of the present invention.

### Best Mode(s) For Carrying Out The Invention

Referring to Figure 1, which schematically illustrates a transmission system 10 in accordance with the present invention. The transmission system 10 is preferably for use with any conventional automatic transmission or any type of automated manual transmission.

The disclosed transmission system 10 includes a power source 12, such as a vehicle internal combustion engine having an engine crankshaft. The power source 12 is in electrical communication with an electromagnetic device 14. The electromagnetic device 14 is preferably a DC motor, but may be any other asynchronous machine or electric motor. The power source 12 is in electrical communication with a start/shift clutch 16 preferably through the engine crankshaft. The clutch may be any commercially available friction clutch. The clutch 16 is in mechanical communication with a transmission 18 in order to effectuate gear changing and torque transfer. The transmission 18 is preferably in communication with an output device 20 such as an output shaft to drive the axles and wheels of the vehicle, as is well known.

As is well known in current transmission systems, each time a gear shift is made, the engine speed changes. For example, as a vehicle accelerates, a gear shift occurs and the engine speed drops. This engine speed drop is accomplished through the use of an energy absorption element, such as a friction element which absorbs the engine inertia and energy. As discussed above, these current transmission systems suffer from a variety of disadvantages.

As shown in Figure 1, the electromagnetic device 14 is in communication with the power source 12 to provide precise control over the energy generated by the power source 12, by preferably, attaching the electromagnetic device 14 to the back of the power source 12. It should be understood that the electromagnetic device 14 may be located in a variety of different locations and still control the power source 12.

In accordance with the present invention, in the cylinder firing mode, where a positive torque pulse is created and the engine crankshaft accelerates, the electromagnetic device 14 is activated by the control electronics 22 in order to absorb some of the rotational kinetic energy generated by the crankshaft acceleration. In this mode, the electromagnetic device 14 functions as a generator or momentary brake to truncate the crankshaft acceleration.

Further, in the induction/compression mode where a negative torque pulse is created and the engine crankshaft decelerates, the electromagnetic device 14 is actuated by the control electronics 22, such as a controller, in order to minimize the rotational kinetic energy created by the crankshaft deceleration. In this mode, the electromagnetic device 14 functions as a momentary motor creating a positive torque pulse augmenting the engine and thus mitigating crankshaft deceleration. The end result is that power source output torsional signature is relatively smooth and devoid of plus or minus ripple.

In the preferred embodiment, the transmission system 10 is capable of responding to these torque/speed fluctuations in 4-10 msec. The disclosed transmission system 10 can thus affect engine speed acceleration/deceleration within the resultant time span of a typical transmission upshift. Accordingly, through the use of the electromagnetic device 14 coupled to the power source 12, precise momentary control of engine speed, independent of driver input (constant throttle), or engine torque management can provide synchronized speed in a unique advantageous manner. The disclosed system 10 is also far less complex than prior systems and requires a much smaller envelope.

It will be understood that the present system can be used in connection with any type of power transmission, including automatic and automated manual transmissions. In connection with any power transmission, the use of the disclosed electromagnetic device 14 and the associated electronics 22 provides precise input speed pull down, in concert with the proper timing of the primary power transfer clutch 16. Additionally, the demands that are placed on the actuation mechanisms in current transmission systems are significantly simplified. Moreover, in accordance with the preferred embodiment, the inertia phase demand energy that is input into the shifting clutch 16 is eliminated, which results in a significant reduction in thermal load. When the disclosed system 10 is incorporated into an automated manual transmission, it provides the additional advantage of eliminating the need for synchronizers which are currently used in most automated manual transmissions.

It will be understood that the disclosed power transmission system 10 can also be used in connection with a conventional stepped ratio planetary automatic transmission. As discussed above, current conventional automatic transmissions require dynamic shifting friction elements to transmit system engine output torque. The conventional automatic transmissions also require friction elements to transmit the engine rotation kinetic energy resultant of engine speed pull down during an upshift. The kinetic energy absorbed by the friction elements during the inertial phase of an upshift is a significant amount of the resultant thermal load experienced during the friction element's expected life cycle.

Thus, the electromagnetic device 14 and the associated electronics 22 absorb the inertial kinetic energy phase, and resultant engine speed pull down which results in a significant reduction of the thermal energy input to a given friction element. This provides the advantage of increased life expectancy and consistent performance characteristics throughout service life. Further, the present invention can also provide reduced friction element space envelope requirements and significantly improved shift feel or quality issues.

While upshifts and related engine speed control during pull down (inertia) phase have been discussed, it should be understood that the electromagnetic device 14 and the associated electronics 22 will control a coasting or forced power on a downshift in the reverse manner to the manner described above. In operation, the electromagnetic device 14 switches to assist in providing the necessary engine acceleration up to the required synchronous speed and/or momentarily hold speed allowing the transmission to complete actual gear change in preparation for transmitting power. Thus, the electromagnetic device 14 can be switched between a motor mode and a generator mode to assist in engine acceleration and engine deceleration as required. The energy required to be absorbed or exerted by the electromagnetic device can be readily determined by one of skill in the art depending upon the specific gear ratios and other variables. Based on this determination, the electronics can be programmed to control the electromagnetic device 14 as required.

Having now fully described the invention, it will become apparent to one of ordinary skill in the art that many changes and modifications can be made thereto without departing from the spirit or scope of the invention as set forth herein.

## Claims

1. A transmission system (10) for a motor vehicle comprising:
an input power source (12);
a friction element (16) in mechanical communication with said input power source (12);
a mechanical system (18) in mechanical communication with an output from said friction element (16) to effectuate gear changing events; and
an electromagnetic device (14) in communication with said input power source (12);
whereby said electromagnetic device (14) operates as a generator to reduce engine speed as required and as a momentary motor as required to accelerate the rotational speed created by said input power source (12).

2. The transmission system (10) of claim 1, wherein said input power source (12) is a vehicle internal combustion engine.

3. The transmission system (10) of claim 2, wherein said friction element (16) is a shift clutch.

4. The transmission system (10) of claim 3, wherein said vehicle internal combustion engine is in mechanical communication with said friction clutch through an engine crankshaft.

5. The transmission system (10) of claim 4, wherein said electromagnetic device (14) functions as a generator when required to reduce or pull down the engine crankshaft rotation during a ratio changing event.

6. The transmission system (10) of claim 4, wherein said electromagnetic device (14) functions as a generator when said engine crankshaft is caused to accelerate.

7. The transmission system (10) of claim 4, wherein said electromagnetic device (14) functions as a momentary motor when said engine crankshaft is caused to decelerate.

8. The transmission system (10) of claim 4, wherein said electromagnetic device (14) functions as a momentary motor when required to momentarily accelerate the engine crankshaft rotation during a ratio changing event.

9. The transmission system (10) of claim 1, wherein said electromagnetic device (14) is an asynchronous machine.

10. The transmission system (10) of claim 9, wherein said electromagnetic device (14) is a DC motor.

11. The transmission system (10) of claim 1, wherein said mechanical system (18) is an automatic transmission.

12. The transmission system (10) of claim 1, wherein said mechanical system (18) is an automated manual transmission.

13. A transmission system (10) for a motor vehicle comprising:
a vehicle internal combustion engine (12) having a crankshaft;
a friction element (16) having an input end and an output end, said input end being in mechanical communication with said engine crankshaft;
a transmission (18) in mechanical communication with said output end of said friction element (16) to effectuate ratio changes thereof; and
a synchronous device (14) in communication with said vehicle engine in order to reduce the rotational kinetic and thermal energy applied to said friction element (16),
whereby the system (10) provides synchronous speed during ratio changing events.

14. The transmission system (10) of claim 13, wherein said friction element (16) is a friction clutch.

15. The transmission system (10) of claim 13, wherein said transmission (18) is an automated manual transmission.

16. The transmission system (10) of claim 13, wherein said transmission (18) is a stepped ratio planetary automatic transmission.

17. The transmission system (10) of claim 13, wherein said asynchronous device (14) is a DC motor.

18. The transmission system (10) of claim 13, wherein said asynchronous device (14) is controlled by electronics (22) in order to shift said asynchronous device (14) between a generator and a momentary motor to reduce thermal load on said friction element (16).

19. The transmission system (10) of claim 18, wherein said asynchronous device (14) functions as a generator when said engine crankshaft is caused to accelerate.

20. The transmission system (10) of claim 20, wherein said asynchronous device (14) functions as a generator when required to reduce or pull down the engine crankshaft rotation during a ratio changing event.

21. The transmission system (10) of claim 18, wherein said asynchronous device (14) functions as a momentary motor when said engine crankshaft is caused to decelerate.

22. The transmission system (10) of claim 18, wherein said asynchronous device (14) functions as a momentary motor when required to momentarily accelerate the engine crankshaft rotation during a ratio changing event.

23. A method for controlling a transmission system for a vehicle, the system (10) having an internal combustion engine (12), a crankshaft, a friction element (16), and an output mechanical system (18), comprising:
providing an electromagnetic device (14) in communication with the internal combustion engine (12);
truncating cylinder firing mode by said electromagnetic device (14) when said crankshaft is caused to accelerate such that said electromagnetic device (14) acts as a generator and absorbs kinetic energy during a ratio changing event; and
augmenting the motor (12) by said electromagnetic device (14) when said crankshaft is caused to decelerate, such that said electromagnetic device (14) acts as a momentary motor during a ratio changing event.

24. The method of claim 23, wherein said electromagnetic device (14) is an asynchronous device.

25. The method of claim 24, wherein said output mechanical system (18) is a planetary automatic transmission.

26. The method of claim 24, wherein said output mechanical system (18) is an automated manual transmission.
